# EUROPEAN PATENT SPECIFICATION

(11) **EP 4 060 943 B1**
(45) Date of publication and mention of the grant of the patent: **12.11.2025**
(21) Application number: 22162707.8
(22) Date of filing: 17.03.2022
(51) Int. Cl.: H04L 12/28

(54) **SCENE SUGGESTIONS IN A HOME AUTOMATION SYSTEM**
SZENENVORSCHLÄGE IN EINEM HAUSAUTOMATISIERUNGSSYSTEM
SUGGESTIONS DE SCÈNE DANS UN SYSTÈME D'AUTOMATISATION DOMESTIQUE

(30) Priority: 17.03.2021 BE 202105204
(43) Date of publication of application: 21.09.2022
(73) Proprietor: Niko NV, 9100 Sint-Niklaas (BE)
(72) Inventor: VERBIEST, Nele, 9100 Sint-Niklaas (BE); DE BOCK, Yannick, 9120 Beveren (BE); GOEMAERE, Geert, 2900 Schoten (BE)
(74) Representative: Calysta NV

(56) References cited:
- US-A1- 2018 323 996

## Description

### Technical field of the invention

The present invention relates to a home automation system. More particularly, the present invention relates to scene suggestions in a home automation system based on the use of the system. Scene suggestions are done for mood settings as well as for sleep settings and/or absence settings and/or hibernate settings.

### Background of the invention

Home automation systems are currently widely used. More and more households make use of home automation systems in their homes. Installation and configuration of such home automation system is done by an installer. However, at the time of configuration of the home automation system, most of the time in a new home, it is not yet known exactly how the users will use their home automation systems, and such systems are mostly configured according to standard settings. When a home automation system is installed, it is further also not clear which moods, i.e. combinations of device settings that are handy to use together, should be installed. Hence, many people don't have relevant moods installed, and therefore they are not using their home automation system to the fullest.

During use, a user gets to know his installation and the way it works, and then often want to change things to the configuration. Only few user know how to change the configuration of the home automation system, so most of the time the installer has to come back to change the configuration of the home automation system.

Some home automation systems already have a way to provide for feedback and suggest some new configurations for the user.

Existing methods for suggesting configurations are described in US 2019/0215184 (Automatic scene creation using home device control) and US 2018/091326 (Generating suggestions for scenes and triggers by resident device).

A disadvantage of the methods described in the above documents is that the collected data is processed locally, in the controller of the home automation system. This limits the amount of data that can be processed and this may result in less relevant suggestions for personalized scenes.

Another existing method is described in US 2018/0323996, in which methods are described by which an assistant device can learn user's habits in controlling the appliances associated with the assistant device. The assistant device can automatically learn which appliances-controlling actions tend to be performed together, and group those actions into scenes. Further, the assistant device can recognize the condition frequently present before a scene or an action within the scene is performed, and create a trigger for the scene and/or the action. The assistant device can automatically recognize the condition is present in the future, and offer to perform the scene and/or the action.

In US 2018/0323996, devices actions that are used together frequently, i.e. devices that are frequently activated at the same time, are defined as a scene. The system in US 2018/0323996 uses information from different homes to define a library of predefined scenes to be chosen from. Hence, a user is limited to the scenes that are defined in the library of predefined scenes. In US 2018/0323996 different scenes can be created for different users.

### Summary of the invention

It is an object of embodiments of the present invention to provide a way of suggesting personalized scene settings of electric or electronic devices in a home automation system to a user.

The above objective is accomplished by the method claimed in appended claim 1.

The present invention provides a method for suggesting personalized settings for at least one electric or electronic device in a home automation system to a user. The home automation system comprises a plurality of such electric or electronic devices, each electric or electronic device being adapted for, when activated, execute programmed events according to settings of the user. Events are signals emitted by applying control actions, e.g. pressing a button, or status changes, e.g. a temperature sensor sending a signal with measured current temperature. The method comprises, in a first step, collecting data about subsequent events for the at least one electric or electronic device during a predetermined time period, for example for a period between two weeks and four months, e.g. during a period of one month. In a next step, the collected data is encoded and transported to the cloud for processing. From the processed data, personalized settings are determined for the at least one electric or electronic device. Next, the personalized settings are suggested to the user by sending them to a remote device such as e.g. a smartphone, a tablet, a computer, a touch screen, or any other suitable device having a user interface. Processing the collected data is done by first order the events according to a timestamp for each of the at least one electric or electronic device in a table. In a next step, for each of the electric or electronic devices and based on the events, subsequent statuses of the electric or electronic device during the predetermined time period are calculated, the status of the electric or electronic device being the settings of the electric or electronic device between events. Therefrom a value for the electric or electronic devices is determined at each time, the value indicating what the setting of the electric or electronic device was changed to.

The suggested personalized settings are based on device settings or statuses that are frequently used together. Therefore, devices need to be active at the same time, but do not necessarily be activated at the same time. For example, lights that are frequently in the on state together for a particular time, can be defined as a scene, they do therefore not need to be activated at the same time.

The method according to embodiments of the invention only uses settings from the home where the home automation system is installed and not from other systems in other homes or buildings. That is why we call the suggested settings personalized settings, as they are really tuned based on the way the users in that home use their electric and electronic devices in the home automation system. The suggested personalized settings are thus based on the user experience in that home or building, and not on overall use and user experience of all users of that home automation system on other locations.

An advantage of the method according to embodiments of the invention is that any possible scene can be created. The suggestion of scenes is not based on a predefined scene library, but is really based on how users use their electric and electronic devices. Again, that is why the suggested scenes are called personalized scenes.

The suggested scenes are not user dependent within a home or building, but are created for the home as an entity.

A further advantage of the method according to embodiments of the invention is that, because processing is done in the cloud, more relevant suggestions can be done to the user than when only a small amount of data can be processed, e.g. when data processing is done locally in the home automation system.

Further advantageous features of the inventions are included in the appended dependent claims.

The present invention is implemented in a home automation system comprising:
- a plurality of electric or electronic devices, each electric or electronic device being adapted for, when activated, execute programmed events according to settings of the user, events being signals emitted by applying control actions e.g. pressing a button, or status changes e.g. a temperature sensor sending a signal with measured current temperature,
- means, e.g. a gateway or any other suitable IOT enabled smart hub or any other device with IOT capabilities, for collecting data about subsequent events for the at least one electric or electronic device during a predetermined time period,
- means for sending the collected data to the cloud for processing,
- means for, from the processed data, determining suggested settings for the at least one device, and
- means for suggesting the personalised settings to the user by sending them to a remote device, such as e.g. a smartphone, a tablet, a computer, a touch screen, or any other suitable device having a user interface.

According to embodiments of the invention, the at least one electric or electronic device may be one or more of a lighting device, blinds, shutters, a music device, ventilation, heating, connected sockets or any other electric or electronic device that can be controlled by a home automation system.

### Brief description of the drawings

It has to be noted that same reference signs in the different figures refer to same, similar or analogous elements.

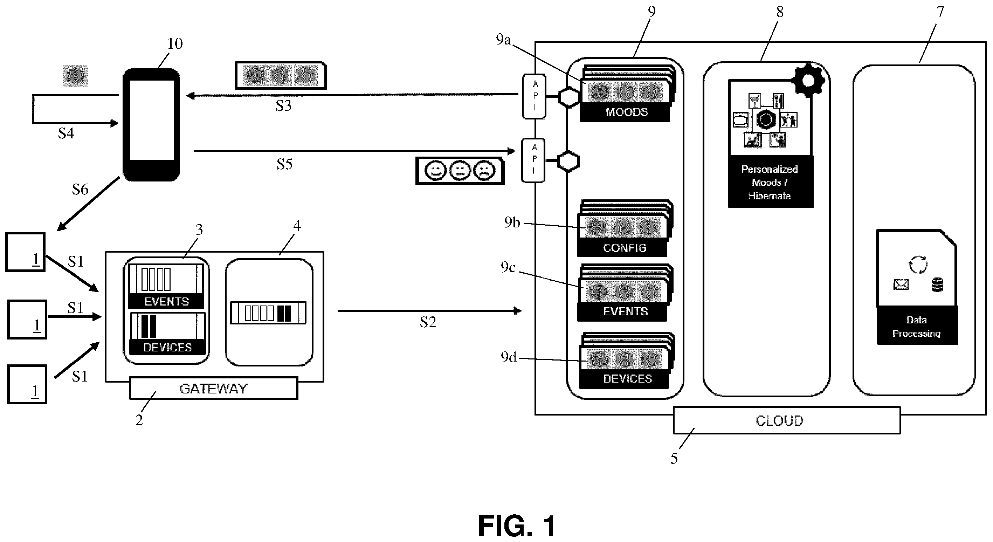

Fig. 1 schematically illustrates a method according to embodiments of the present invention.

### Description of illustrative embodiments

In the description different embodiments will be used to describe the invention. Therefore reference will be made fig. 1, however, the invention is only limited by the claims. The drawing is thus for illustrative purposes, the size of some of the elements in the drawing may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

In a first aspect, the present invention provides a method for suggesting personalized settings for at least one electric or electronic device in a home automation system to a user. The home automation system comprising a plurality of such electric or electronic devices, each electric or electronic device being adapted for, when activated, execute programmed events according to settings of the user. With events is meant signals emitted by applying controlled actions, such as e.g. pressing a button, or by status changes, such as e.g. a temperature sensor sending a signal with a measured current temperature.

The method comprises collecting data about subsequent events for the at least one electric or electronic device during a predetermined time period, encoding the collected data and transport it to the cloud for processing, from the processed data, determining personalized settings for the at least one electric or electronic device, and suggesting the personalized settings to the user by sending them to a remote device.

The suggested personalized settings are based on device settings or statuses that are frequently used together. Therefore, devices need to be active at the same time, but do not necessarily be activated at the same time. For example, lights that are frequently in the on state together for a particular time, can be defined as a scene, they do therefore not need to be activated at the same time.

The method according to embodiments of the invention only uses settings from the home where the home automation system is installed and not from other systems in other homes or buildings. That is why we call the suggested settings personalized settings, as they are really tuned based on the way the users in that home use their electric and electronic devices in the home automation system. The suggested personalized settings are thus based on the user experience in that home or building, and not on overall use and user experience of all users of that home automation system on other locations.

An advantage of the method according to embodiments of the invention is that any possible scene can be created. The suggestion of scenes is not based on a predefined scene library, but is really based on how users use their electric and electronic devices. Again, that is why the suggested scenes are called personalized scenes.

The suggested scenes are not user dependent within a home or building, but are created for the home as an entity.

A further advantage of the method according to embodiments of the invention is that, because processing is done in the cloud, more relevant suggestions can be done to the user than when only a small amount of data can be processed, e.g. when data processing is done locally in the home automation system.

The present invention will hereinafter be described by means of different embodiments. It has to be understood that these embodiments are only for the ease of understanding the invention and are not intended to limit the invention in any way.

The present invention aims at suggesting moods relevant to the household, based on historical usage of the home automation system.

The method according to embodiments of the invention will be described by means of Fig. 1.

The method intends to suggest personalized moods or settings for at least one electric or electronic device 1 in a home automation system. Each of the electric or electronic devices 1 is adapted to, when activated, execute programmed events according to settings of the user. With events is meant signals emitted by applying control actions, such as e.g. pressing a button, or status changes, such as e.g. a temperature sensor sending a signal with measure current temperature. According to embodiments of the invention, the at least one electric or electronic device may be one or more of a lighting device, blinds, shutters, a music device, ventilation, heating, connected sockets or any other electric or electronic device that can be controlled by a home automation system.

In a first step S1 date is collected from the electric or electronic devices 1 in the home automation system. The data may comprise events, i.e. signals emitted by applying control actions or status changes in the home control system and may comprise information about the devices present in the home automation system and their properties. Examples of events can be, for example but not limited to, lights switched on or off, brightness of the lights changed, ventilations settings changed, blind settings changed, heating settings changed, motion was detected, ...

The means 2 for collecting this data may, for example, be a gateway, or may be any other suitable IOT enabled smart hub or any other device with IOT capabilities. The means 2 for collecting data may comprise a collector 3 and a publisher 4. In the collector 3 the information about the events and the devices is collected. In the publisher 4 the data is encoded for efficient transport from the means 2 for collecting data to the cloud 5. Encoding the date is done as follows. The events have timestamp (indicating when the event happened), name (which device was changed) and value (what was the setting changed to). According to embodiments of the invention, the events a table is set up in which the events are ordered according to the timestamp. It is assumed that in between events, no changes are made to the devices 1. The settings of the devices between the events are called status. For example, lights that are on are in between putting the lights on and putting the light off, which are both events. Hence, the light that is on is a status. Similar, lights that are off are in between the event of putting the light off and the event of again putting the lights on. Thus, the lights that are off is another status. Another example may be the roller blinds that are up. In that case, the roller blinds are in between the event of putting the roller blinds up and the event of putting the roller blind down. The roller blinds being up is thus a status of the roller blinds. Similar, the roller blinds being down is in between the event of putting the roller blinds down and the event of putting the roller blinds back up. Thus, the roller blinds being down is another status of the roller blinds.

Then, for each device 1 the status is calculated based on the events. As a result, a value is obtained for the status of each of the devices 1 at each time.

In step S2 the collected, encoded data is sent to the cloud 5. Data is eligible for transport to the cloud 5 at regular time intervals or based on local buffer capacity constraints. A transport channel will ensure secure and authenticated communication of the data to the cloud 5.

In the cloud 5, the collected, encoded data is stored in a distributed event queue 6, ready to be further processed. In a scheduler 7 the data is subsequently extracted, transformed and stored in a format that is personalised for read performance. This may preferably be done at certain time intervals, such as for example daily.

Then, machine learning techniques are applied to derive personalized moods from the processed data. This happens by means of data mining (indicated by reference number 8 in Fig. 1). In this step, combinations of devices 1 that are frequently used together are searched for by applying factor analysis. A person skilled in the art knows that this is a statistical technique used to describe variability amongst observed, correlated variables in terms of potentially lower number of unobserved variables called factors. For each of the factors the most frequent settings of the devices are searched for in that factor. These settings are then identified using the a priori algorithm. Again, this is known by a person skilled in the art as being a frequent itemset mining technique. Frequent individual items in the database are identified and are extended to larger and larger item sets as long as those item sets appear sufficiently often in the database. Some metrics can be computed for all of the found frequent item sets or, in other words, frequent combination of device settings. For example, support expresses the number of occurrences of the item set. Based on these metrics the most relevant settings are selected.

Hence, from the collected data, settings of a device or devices which are often used or combinations of devices 1 and their settings which are of the used together are found. These are then compared to existing settings and/or moods to find differences, and based on these differences, personalized settings and/or moods are determined. These personalized settings and/or moods are then used to suggest personalised individual settings for the devices 1, or to suggest personalised moods by suggesting a combination of settings for a plurality of devices 1. According to embodiments of the invention, instead of personalised settings or moods, the method according to the invention also applies in case of hibernate settings and/or moods. With hibernate settings and/or moods is meant settings and/or moods used when the user is sleeping, or is absent; A hibernate setting and/or mood is an all-off setting or mood, which means that it most of the time relates to more than one electric or electronic device 1. Nevertheless, depending on the type of home automation system, when the system is rather simple, this may also apply to one electric or electronic device 1.

For determining the hibernate settings and/or moods, all statuses which were stable for longer than a predetermined time period are searched for. The predetermined time period may, for example, be 60 minutes. However, this predetermined time period can be any time period suitable for obtaining reliable suggestions. For each stable status, the percentage of occurrences that started at night perc_night are calculated. From this calculation, a sleep status, absence or away status or hibernate status (used for both sleep and absence/away) can be determined. When the most frequent status has a percentage of occurrences that started at night of higher than 0.75, or in other words, when the most frequent status with perc_night > 0.75, this will be seen as the sleep status. When the most frequent status has a percentage of occurrences that started at night of lower than 0.25, or in other words, when the most frequent status with perc_night < 0.25, this will be seen as the absence or away status. When the most frequent status has a percentage of occurrences that started at night of higher between 0.25 and 0.75, this will be seen as the hibernate status.

All the above described hibernate settings or moods should occur more than 5% of the time, before they will be suggested as personalised hibernate settings and/or moods. The obtained personalised hibernate settings and/or moods are then compared to existing hibernate settings and/or moods compare with existing sleep and/or absence and/or hibernate settings to find differences, and based on these differences, the personalized sleep and/or absence and/or hibernate settings are determined. These personalized sleep and/or absence and/or hibernate settings and/or moods are then used to suggest personalised individual settings for the devices 1, or to suggest personalised moods by suggesting a combination of settings for a plurality of devices 1.

The personalised settings and/or moods or personalised hibernate settings and/or moods are then sent to a remote control device 10 (step S3 in Fig. 1). The remote device 10 may, for example, be a smartphone, a tablet, a computer or a touchscreen. With remote control device 10 is meant a device that is remote from the electric and electronic devices 1 and from other parts of the home automation system. A remote control device 10 makes it possible for the user to see messages related to suggested settings and to, as will be described further, add feedback to the suggested settings.

For the sake of clarity, whenever is referred to settings, reference is made to settings for one of the electric or electronic devices 1 of the home automation system. Whenever is referred to moods, a combinations of settings is meant for a combination of electric or electronic devices 1 in the home automation system is meant.

According to embodiments of the invention, suggested scenes are not user dependent, but are created for the home as an entity. So, scenes that are suggested to the user and then installed, are not different for each user, but are for the home. Hence, the suggested settings will be for all users, there is no distinguishing between different users.

When the personalised settings and/or moods and/or hibernate settings and/or moods are received on the remote device 10, the user can either accept the personalised mood as is, can further customize it according to his preferences or can decline it (step S4 in Fig. 1). The user sends his feedback back to the cloud 5 (step S5 in Fig. 1) on acceptance, customization or by declining of the suggestions via the remote device 10. The feedback that is sent, is encoded and encrypted from the remote device 10 to the cloud 5 where the feedback data 9a is stored in the storage medium 9 together with the personalised settings and/or moods 9a that have been suggested. In this storage medium 9, also the original configuration 9b of the home automation system is stored, as well as the events 9c, i.e. the signals emitted by applying control actions or status changes in the home automation system, and the devices 9d that are present in the home automation system and their properties.

An advantage of the possibility to give feedback is that the suggested settings are more and more created based on the user experience of the user(s) in a home or building and according to the preferences of the user(s).

According to embodiments of the invention, upon accepting the suggested settings and/or moods and/or the suggested hibernate settings and/or moods, the suggestions may be instantiate as actual device configurations. The configuration will be automatically uploaded from the remote device 10 to the devices 1 (step S6 in Fig. 1) such that the suggested device options are automatically activated and can be used by the user.

## Claims

1. Method for suggesting personalized settings for at least one electric or electronic device (1) in a home automation system to a user, the home automation system comprising a plurality of such electric or electronic devices (1), each electric or electronic device (1) being adapted for, when activated, executing programmed events according to settings of the user, the method comprising:
- collecting (S1), by a collector (3) located in a gateway (2), data about subsequent events for the at least one electric or electronic device (1) during a predetermined time period, events being signals emitted by applying control actions or by status changes of the at least one electric or electronic device introduced by the user,
- encoding the collected data, by a publisher (4) located in the gateway (2), and transporting (S2) said encoded collected data to the cloud (5) for processing by the cloud (5),
processing or encoding the collected data comprising:
in a first step, ordering events according to a timestamp for each of the at least one electric or electronic device (1) in a table,
calculating for each of the electric or electronic devices (1) and based on the events, subsequent statuses of the electric or electronic device (1) during the predetermined time period, the status of the electric or electronic device (1) being device settings of the electric or electronic device (1) between events, and determining from said subsequent statuses, a value for the status of the electric or electronic devices (1) at each time, the value indicating what the device setting of the electric or electronic device (1) was changed to,
- from the processed data, determining, by the cloud (5), personalized settings for the at least one electric or electronic device (1) based on finding device statuses that are frequently used together, and
- suggesting the personalized settings to the user by sending (S3) them from the cloud (5) to a remote control device (10).

2. Method according to claim 1, further comprising:
- accepting, customizing or ignoring the personalised settings and/or moods and/or hibernate settings and/or moods on the remote control device (10), and
- sending this feedback from the remote control device (10) to the cloud (5) for optimizing the processing method.

3. Method according to any of the previous claims, wherein determining personalized settings for the at least one electric or electronic device (1) comprises determining personalized mood settings and is done by:
- find combinations of electric or electronic devices (1) that are frequently used together by using factor analysis,
- find most frequent settings of the electric or electronic devices (1) in that factor, and
- compare with existing mood scene settings to find differences, and
- based on the differences, determine the personalized mood scene settings.

4. Method according to any of claims 1 to 2 wherein determining personalized settings for the at least one electric or electronic device (1) comprises determining personalized sleep and/or absence and/or hibernate settings and is done by:
- find all stable statuses which lasted longer than a predetermined time frame,
- for each stable status, calculate percentages of occurrences that start at night (perc_night), and
- determine personalised settings according to:
sleep status: most frequent status with perc_night > 0,75, and/or
absence status: most frequent status with perc_night < 0.25, and/or
hibernate status: most frequent status with perc_night between 0.25 and 0.75,
- compare with existing sleep and/or absence and/or hibernate settings to find differences, and
- based on the differences, determine the personalized sleep and/or absence and/or hibernate settings.

5. Method according to any of the previous claims, further comprising,:
- upon accepting the personalised settings, automatically configuring the personalised settings in the at least one device.

6. Method according to any of the previous claims, wherein the predetermined time period is between 2 weeks and 4 months.

## Patentansprüche

1. Verfahren zum Vorschlagen personalisierter Einstellungen für wenigstens eine elektrische oder elektronische Vorrichtung (1) in einem Hausautomationssystem an einen Benutzer, wobei das Hausautomationssystem eine Mehrzahl solcher elektrischen oder elektronischen Vorrichtungen (1) umfasst, wobei jede elektrische oder elektronische Vorrichtung (1) angepasst ist, um bei Aktivierung programmierte Ereignisse gemäß den Einstellungen des Benutzers auszuführen, wobei das Verfahren umfasst:
- Sammeln (S1) durch einen Sammler (3), der sich in einem Gateway (2) befindet, von Daten über nachfolgende Ereignisse für die wenigstens eine elektrische oder elektronische Vorrichtung (1) während eines vorbestimmten Zeitraums, wobei Ereignisse Signale sind, die durch das Anwenden von Steueraktionen oder durch Statusänderungen der wenigstens einen elektrischen oder elektronischen Vorrichtung emittiert werden, die von dem Benutzer eingeführt wurden,
- Codieren durch einen Publisher (4), der sich in dem Gateway (2) befindet, der gesammelten Daten und Transportieren (S2) der codierten gesammelten Daten zu der Cloud (5) zum Verarbeiten durch die Cloud (5)
Verarbeiten oder Codieren der gesammelten Daten, umfassend:
in einem ersten Schritt Ordnen von Ereignissen gemäß einem Zeitstempel für jede der wenigstens einen elektrischen oder elektronischen Vorrichtung (1) in einer Tabelle,
für jede der elektrischen oder elektronischen Vorrichtungen (1) und auf Grundlage der Ereignisse Berechnen der nachfolgenden Status der elektrischen oder elektronischen Vorrichtung (1) während des vorbestimmten Zeitraums, wobei der Status der elektrischen oder elektronischen Vorrichtung (1) Vorrichtungseinstellungen der elektrischen oder elektronischen Vorrichtung (1) zwischen Ereignissen sind, und
Bestimmen aus den nachfolgenden Zuständen eines Wertes für den Status der elektrischen oder elektronischen Vorrichtung (1) zu jedem Zeitpunkt, wobei der Wert angibt, auf welche Vorrichtungseinstellung der elektrischen oder elektronischen Vorrichtung (1) gewechselt wurde,
- Bestimmen durch die Cloud (5) aus den verarbeiteten Daten von personalisierten Einstellungen für die wenigstens eine elektrische oder elektronische Vorrichtung (1) auf Grundlage des Findens von Vorrichtungsstatus, die häufig zusammen verwendet werden,
und
- Vorschlagen dem Benutzer der personalisierten Einstellungen, indem sie von der Cloud (5) an eine Fernbedienungsvorrichtung (10) gesendet werden.

2. Verfahren nach Anspruch 1, das ferner umfasst:
- Akzeptieren, benutzerdefiniertes Anpassen oder Ignorieren der personalisierten Einstellungen und/oder Stimmungen und/oder Ruhezustandseinstellungen und/oder Stimmungen auf der Fernbedienungsvorrichtung (10), und
- Senden dieser Rückmeldung von der Fernbedienungsvorrichtung (10) an die Cloud (5) für die Optimierung des Verarbeitungsverfahrens.

3. Verfahren nach einem der vorhergehenden Ansprüche, wobei das Bestimmen personalisierter Einstellungen für die wenigstens eine elektrische oder elektronische Vorrichtung (1) das Bestimmen personalisierter Stimmungseinstellungen umfasst und durchgeführt wird durch:
- Finden von Kombinationen von elektrischen oder elektronischen Vorrichtungen (1), die häufig zusammen verwendet werden, durch Verwenden einer Faktoranalyse,
- Finden der häufigsten Einstellungen der elektrischen oder elektronischen Vorrichtungen (1) in diesem Faktor und
- Vergleichen mit bestehenden Stimmungsszeneneinstellungen, um Unterschiede zu finden, und
- auf Grundlage der Unterschiede Bestimmen der personalisierten Stimmungsszeneneinstellungen.

4. Verfahren nach einem der Ansprüche 1 bis 2, wobei das Bestimmen personalisierter Einstellungen für die wenigstens eine elektrische oder elektronische Vorrichtung (1) das Bestimmen personalisierter Schlaf- und/oder Abwesenheits- und/oder Ruhezustandseinstellungen umfasst und durchgeführt wird durch:
- Finden aller stabilen Status, die länger als ein vorbestimmter Zeitrahmen andauerten,
- für jeden stabilen Status Berechnen der Prozentsätze der Vorkommen, die nachts beginnen (perc_night), und
- Bestimmen personalisierter Einstellungen gemäß:
Schlafstatus: häufigster Status mit perc_night >0,75 und/oder
Abwesenheitsstatus: häufigster Status mit perc_night <0,25 und/oder
Ruhezustandsstatus: häufigster Status mit perc_night zwischen 0,25 und 0,75,
- Vergleichen mit bestehenden Schlaf- und/oder Abwesenheits- und/oder Ruhezustandseinstellungen, um Unterschiede zu finden, und
- auf Grundlage der Unterschiede Bestimmen der personalisierten Schlaf- und/oder Abwesenheits- und/oder Ruhezustandseinstellungen.

5. Verfahren nach einem der vorhergehenden Ansprüche, das ferner umfasst:
nach Akzeptieren der personalisierten Einstellungen automatisches Konfigurieren der personalisierten Einstellungen in der wenigstens einen Vorrichtung.

6. Verfahren nach einem der vorhergehenden Ansprüche, wobei der vorbestimmte Zeitraum zwischen 2 Wochen und 4 Monaten liegt.

## Revendications

1. Procédé pour suggérer à un utilisateur des paramètres personnalisés pour au moins un dispositif électrique ou électronique (1) dans un système domotique, le système domotique comprenant une pluralité de ces dispositifs électriques ou électroniques (1), chaque dispositif électrique ou électronique (1) étant adapté pour, lorsqu'il est activé, exécuter des événements programmés selon les paramètres de l'utilisateur, le procédé comprenant :
- la collecte (S1), par un collecteur (3) situé dans une passerelle (2), de données sur des événements ultérieurs pour l'au moins un dispositif électrique ou électronique (1) pendant une période de temps prédéterminée, les événements étant des signaux émis par l'application d'actions de commande ou par des changements d'état de l'au moins un dispositif électrique ou électronique introduits par l'utilisateur,
- le codage des données collectées, par un éditeur (4) situé dans la passerelle (2), et le transport (S2) desdites données collectées codées vers le nuage informatique (5) pour traitement par le nuage informatique (5),
le traitement ou le codage des données collectées comprenant :
dans une première étape, le classement des événements en fonction d'un horodatage pour chacun de l'au moins un dispositif électrique ou électronique (1) dans une table,
le calcul pour chacun des dispositifs électriques ou électroniques (1) et sur la base des événements, des états ultérieurs du dispositif électrique ou électronique (1) pendant la période de temps prédéterminée, l'état du dispositif électrique ou électronique (1) étant des paramètres de dispositif du dispositif électrique ou électronique (1) entre les événements, et
la détermination, à partir desdits états ultérieurs, d'une valeur pour l'état des dispositifs électriques ou électroniques (1) à chaque instant, la valeur indiquant à quel changement a été soumis le paramètre de dispositif du dispositif électrique ou électronique (1),
- à partir des données traitées, la détermination, par le nuage informatique (5), de paramètres personnalisés pour l'au moins un dispositif électrique ou électronique (1) sur la base de la recherche d'états de dispositif qui sont fréquemment utilisés ensemble, et
- la suggestion des paramètres personnalisés à l'utilisateur par leur envoi (S3) à partir du nuage informatique (5) vers un dispositif de commande à distance (10).

2. Procédé selon la revendication 1, comprenant en outre :
- le fait d'accepter, de personnaliser ou d'ignorer les paramètres personnalisés et/ou les humeurs et/ou de mettre en hibernation des paramètres et/ou des humeurs sur le dispositif de commande à distance (10), et
- l'envoi de ce retour d'information à partir du dispositif de commande à distance (10) vers le nuage informatique (5) afin d'optimiser le procédé de traitement.

3. Procédé selon l'une quelconque des revendications précédentes, dans lequel la détermination de paramètres personnalisés pour l'au moins un appareil électrique ou électronique (1) comprend la détermination des paramètres d'humeur personnalisés et est réalisée par :
- la recherche de combinaisons de dispositifs électriques ou électroniques (1) qui sont fréquemment utilisés ensemble à l'aide d'une analyse factorielle,
- la recherche de paramètres les plus fréquents des dispositifs électriques ou électroniques (1) dans ce facteur, et
- la comparaison avec les paramètres de scène d'humeur existants pour trouver des différences, et
- sur la base des différences, la détermination des paramètres de scène d'humeur personnalisés.

4. Procédé selon l'une quelconque des revendications 1 et 2 dans lequel la détermination de paramètres personnalisés pour l'au moins un dispositif électrique ou électronique (1) comprend la détermination de paramètres personnalisés de veille et/ou d'absence et/ou d'hibernation et est réalisée par :
- la recherche de tous les états stables qui ont duré plus longtemps qu'un intervalle de temps prédéterminé,
- pour chaque état stable, le calcul de pourcentages d'occurrences qui commencent la nuit (perc_night), et
- la détermination de paramètres personnalisés selon :
l'état de veille : état le plus fréquent avec perc_night > 0,75, et/ou
l'état d'absence : état le plus fréquent avec perc_night < 0,25, et/ou
l'état d'hibernation : état le plus fréquent avec perc_night compris entre 0,25 et 0,75,
- la comparaison avec des paramètres de veille et/ou d'absence et/ou d'hibernation existants afin de trouver des différences, et
- sur la base des différences, la détermination des paramètres personnalisés de veille et/ou d'absence et/ou d'hibernation.

5. Procédé selon l'une quelconque des revendications précédentes, comprenant en outre :
lors de l'acceptation des paramètres personnalisés, la configuration automatique des paramètres personnalisés dans l'au moins un dispositif.

6. Procédé selon l'une quelconque des revendications précédentes, dans lequel la période de temps prédéterminée est comprise entre 2 semaines et 4 mois.
